# EUROPEAN PATENT SPECIFICATION

(11) **EP 2 489 561 B1**
(45) Date of publication and mention of the grant of the patent: **20.08.2014**
(21) Application number: 12156058.5
(22) Date of filing: 17.02.2012
(51) Int. Cl.: B60R 25/10

(54) **Elastic tarpaulin with tamper detection**
Elastische Abdeckplane mit Manipulationserfassung
Bâche élastique avec détection de dépassement

(30) Priority: 18.02.2011 BE 201100116
(43) Date of publication of application: 22.08.2012
(73) Proprietor: Sioen Industries NV, 8850 Ardooie (BE)
(72) Inventor: Groenendaal, Bert, 9910 Knesselare (BE); Wille, Joost, 8210 Loppem (BE)
(74) Representative: Van Borm, Werner August H.M.

(56) References cited:
- EP-A2- 0 540 139
- WO-A2-2008/002878
- AU-B2- 598 272
- US-A- 5 677 674
- US-A1- 2006 145 870
- US-A1- 2008 075 934
- US-A1- 2009 115 607
- US-A1- 2010 197 184

## Description

### INTRODUCTION

The invention relates to a tarpaulin for covering goods, comprising an elastic fabric which is provided with a plastic coating layer, and comprising an electronic tamper detection circuit comprising an electrically-conductive path provided on said tarpaulin and made of an elastic electrically-conductive material, as well as to a method for the manufacturing thereof.

### BACKGROUND OF THE INVENTION

Tarpaulins are typically used to shield goods in a container with an at least partially open structure, from the outside environment. For example, a container or cargo compartment of a truck is typically constructed as a metal frame on a floor slab. To this end, tarpaulins are attached to the metal frame to close off the side walls and/or top wall. Tarpaulins are also used to shield off pallet goods from the outside environment. To this end, the tarpaulin will essentially have a cubical shaped with one open side such that the open cube is able to be placed over the pallet with the pallet goods. Furthermore, tarpaulins are used to shield off train wagons, boats and cars, or to build tents with.

Tarpaulins usually comprise PVC-coated polyester fabrics (heavy quality), cotton / polyester fabrics (light quality) and nylon fabrics, wherein the tarpaulin has a sustainable and recyclable character and is therefore distinct from, for example, packaging film which has a temporary and disposable character. Tarpaulins may come in different colours and sizes.

The disadvantage of the use of tarpaulins as a shielding means is that they are easy to cut open with a sharp object, such as a knife or a piece of glass. Although the tarpaulin may avoid goods in a container, pallet or tent to be visible, or shield them off very well against weather conditions and mechanical impact (load security), tarpaulins typical provide no high resistance against unauthorized access to the goods (such as in the case of theft, burglary and vandalism).

To obtain an increased resistance against unauthorized access, in particular theft, tarpaulins were designed in which metal wires, strips or tapes are associated with the tarpaulin. These metal wires, strips or tapes are not as easy to cut as the fabric with the plastic coating comprising the tarpaulin. However, the tarpaulin increases in weight and becomes less flexible. The introduction of a metal wire, strip or tape on or in a tarpaulin was also found to be cumbersome and expensive in practice. An example of such a tarpaulin is Sio-steel of Sioen Industries (Ardooie, Belgium).

Further tarpaulins are known which do not directly offer resistance against unauthorized access, in particular theft, but which indirectly prevent theft by detecting and signalling theft. Such a tarpaulin is disclosed in WO2008/043955 A2 (Gasulla et al, 2008) in which a tarpaulin with five layers is described. Herein, layer 2 and layer 4 are electrically-conductive and the other layers are electrically-insulating. When, for example, a thief presses a sharp conductive object, such as a knife, through the tarpaulin, the knife will electrically connect layers 2 and 4, such that tampering with the tarpaulin is detected and subsequently signalled.

The disadvantage of such a tarpaulin from the prior art is that the configuration, namely large surfaces of an electrically-conducting material which are to be mounted on a tarpaulin, is complex. This renders the production method complicated and expensive. This complex configuration also has a negative effect on the basic properties of such a tarpaulin, namely the weight (as low as possible), and the flexibility (as flexible as possible). Furthermore, the tarpaulin will be expensive due to the fact that two electrically-conductive layers are provided. To be able to detect a burglary, the tarpaulin will need to be cut open with an electrically-conductive object. When the tarpaulin is cut with a piece of glass, it will not be detected, which makes detection unreliable.

WO2008/002878 (Honeywell International Inc., 2008) discloses a dielectric foil for wrapping pallets or containers, wherein an electrical circuit is printed on said foil by means of an electrically-conductive material, for example, an ink containing metal particles. EP1788149 B1 (Ferrari, 2008) also discloses a fabric wherein an electrical circuit is printed on said textile using an electrically-conductive material, for example, an ink which contains metal particles.

In the application of such an anti-theft provision onto an elastic tarpaulin, for example based on a polyvinyl chloride (PVC)-coated polyester, however, often a poor and defective adhesion of the electrically-conductive material to the tarpaulin was found, such that a dysfunctional tarpaulin was obtained. Furthermore, it was found that the flexibility of the electrically-conducting material was insufficient.

### DESCRIPTION OF THE INVENTION

It is an object of the invention to provide a tarpaulin which is elastic, and wherein cutting open of the tarpaulin can be prevented, and wherein the tarpaulin may be produced cheaper and more reliable than the anti-theft tarpaulins from the state of the art.

Surprisingly, it was found that the elasticity (stretchability) of an electrically-conductive material is a factor which is important for obtaining a durable tarpaulin with an electronic tamper detection circuit, applied by a printing or spraying technique. This fact was not known from the prior art where no preference is suggested for the use of a particular type of electrically-conductive material in combination with a particular type of tarpaulin.

To this end, the invention concerns a tarpaulin for covering goods, comprising an elastic fabric which is at least on one side provided with a plastic coating layer, and comprising an electronic tamper detection circuit for detecting tampering with at least one area of the tarpaulin, wherein said circuit comprises an electrically-conductive path provided to said tarpaulin, wherein said path is made of an elastic and electrically-conductive material able to be applied by a printing or spraying technique, wherein the ratio of the maximum elongation of said elastic and electrically-conductive material to the maximum elongation of said elastic fabric which is at least on one side provided with a plastic coating layer, is at least 1.05, and wherein said circuit comprises electronic measuring means which are connected with a first and a second end of said path to measure an electrical measurement value of this path, wherein said measuring means are further provided to generate a signal when a change of said measurement value occurs, as a result of tampering with said tarpaulin, and wherein the maximum elongation is that elongation just before breakage of the material.

Because the conductive path can be applied by means of a printing or spraying technique, complex methods for interconnecting two objects become superfluous. The path may be applied onto the tarpaulin, for example by means of screen printing, inkjet printing, or by spraying, which is easily applicable on a large scale.

In one embodiment, the electrically-conductive path is applied in a substantially meandering pattern which extends over said area.

In one embodiment, the electrically-conductive path is applied on a fabric side of the tarpaulin. In another embodiment, the electrically-conductive path is applied on a plastic coated side of the tarpaulin.

In addition to ease of application, it is a further big advantage that the path, applicable using a printing or spraying technique, can also be repaired. Furthermore, using a change in an electrical measurement value of the conductive path, tampering is determined and a signal is generated. Resistance, inductance or conductivity are examples of electrical measurement values which can be measured, for example, by measuring a current flowing through the path. From a change of a resistance having a size x (not infinite) to a resistance having a infinite size (theoretically), it can be deduced that the conductive path is interrupted. This may occur when an intruder cuts open the tarpaulin, thereby also ripping through the conductive path which may be applied onto the tarpaulin in a meandering pattern. This allows tampering to be detected and signalled.

Preferably, said path has a width of less than 15 mm, preferably less than 5 mm, more preferably less than 3 mm, most preferably about 2 mm. By narrowing down the width of the path, less electrically-conductive material needs to be used. Furthermore, it also appears from practical tests that such a small width is sufficient to have electrical current flow through the path. Also, cutting open the tarpaulin will more quickly result in that the entire path is cut. With a wide path, it is more likely that the cut starts or ends in half the width of the path, such that the path is not completely interrupted.

Preferably, between adjacent parts of the path in said meandering pattern, there is a minimum distance of 50 mm, preferably at least 100 mm, more preferably at least 200 mm, most preferably about 300 mm. A larger distance has as a result that less electrically-conductive material is necessary in order to cover the same area. In addition, such a large distance is still sufficient to guarantee a good protection against burglary, namely an intruder will always cut open the tarpaulin sufficiently far enough in order to enter through the opening, or to insert an object through the opening.

Said path may be constructed as a single conductive strip, as illustrated in WO2008/002878 A2, or as a double conductive strip, as illustrated in EP 1788149 B1.

Preferably, said area has a surface area of at least 2 m², preferably at least 5 m², more preferably at least 10 m², most preferably at least 20 m². The invention is preferably applicable to larger areas because the product, due to its technical construction, may be produced in a simple and relatively inexpensive manner.

Preferably, said elastic and electrically-conductive material exhibits an elasticity, such that said material does not exhibit an electrical interruption at an elongation of 1 %, preferably at an elongation of 2 %, more preferably at an elongation of 3 %, most preferably at an elongation of 5 %. Preferably, the electrically-conductive material has an elongation of 1 to 30 %, preferably an elongation of 2 %, more preferably an elongation of 3 %, more preferably an elongation of 5 %.

A tarpaulin is less elastic than the elastic and electrically-conductive material, and typically has an elasticity such that the tarpaulin may stretch up to 1 %, preferably maximally 3 %, most preferably up to 5 %. However, the invention also includes tarpaulins with an elongation of more than 5 %, e.g. 10 %, 20 % or even 30 %. However, in the latter case, the elongation of the electrically-conductive material also has to be at least 30 %, which considerably increases the risk of rupture. The electrically-conductive material may not be electrically interrupted when stretching the tarpaulin, as this will result in an undesirable change in the electrical measurement value. Even if the tarpaulin is folded, the electrically-conductive path may not be interrupted. By tailoring the elasticity of the elastic and electrically-conductive material, such as defined herein, and the elasticity of the elastic fabric which is at least on one side provided with a plastic coating layer, a reliable operation of the tamper detection system can be guaranteed.

In the context of the present invention, the term "elasticity" refers to the ability of a material to wholly or partly return to its original state after deformation under the influence of a force, in particular a stretching force exerted on the tarpaulin, in particular a lateral stretching force. This deformation is expressed as % elongation.

The elongation of an electrically-conductive material may experimentally be determined by the skilled person in a test set-up, for example, by application of a track of said material onto an elastic carrier and subjecting said carrier to a tensile test (see Example 2).

Preferably, the polarity of the elastic and electrical-conductive material is similar or identical to the polarity of the surface of the fabric or of the plastic coating layer onto which said elastic and electrically-conductive material has been applied. This ensures a good adhesion of the elastic and electrically-conductive material onto said surface. Preferably, on the one hand, the elastic and electrically-conductive material, and on the other hand, the fabric or the plastic coating layer, comprise polar materials.

Preferably, said fabric is a polyester fabric, and preferably, said plastic coating layer is a PVC coating. A polyester cloth with a PVC coating provides a good protection against weather conditions and has a high durability. Furthermore, the elasticity of such a polyester cloth with a PVC coating is limited, such that the electrically-conductive material only has to have a limited elasticity in order to have a high operational reliability.

Preferably, said elastic and electrically-conductive material comprises silver particles in a binder on the basis of a polymer, for example polyurethane. Such silver particles may be comprised in a silver paste, which silver paste is applied using screen printing on the tarpaulin. This applied silver paste will then dry / cure to form an elastic path wherein the silver particles are at least partially responsible for the electrical conductivity of the path. As an alternative to silver pastes, inks and/or pastes based on copper compounds, or based on carbon, for example, carbon nanotubes, can be used.

Preferably, said tarpaulin further comprises communication means for transmitting said signal to an external receiver. Such communication means may be provided as a speaker which emits an audible alarm. Such communication means may be provided as an antenna, transmitting a digital or analog signal to a further antenna, where this signal is further handled. This further antenna may be, for example, operationally connected to the cabin of the truck or to a control room.

Preferably, said measuring means comprise a timer and position-determining means, and said measuring means are provided to generate said signal as a data package comprising a recent time value from said timer and a recent position value from said position-determining means. Because time and place of the burglary are recorded and transmitted, a proper monitoring of the burglary may quickly be arranged.

In one embodiment, a top coating may further be applied, for example, on the basis of an acrylate, provided onto the elastic and electrically-conductive material to protect this material, preferably over the whole of said area, preferably over the entire surface of the tarpaulin. In another embodiment, a plastic-coated open fabric network is welded onto the elastic and electrically-conductive material to protect this material, preferably over the whole of said area, preferably over the entire surface of the tarpaulin.

Furthermore, the invention relates to the method for the manufacture of a tarpaulin for covering goods, wherein the method comprises the steps of:
- providing an elastic fabric;
- applying a plastic coating layer on at least one side of said elastic fabric;
- providing an elastic and electrically-conductive material, wherein the ratio of the maximum elongation of said elastic and electrically-conductive material to the maximum elongation of said elastic fabric that is provided at least on one side with a plastic coating layer, is at least 1.05 ;
- applying by means of a printing or spraying technique said elastic and electrically-conductive material on an area of said tarpaulin in order to form a path therewith which extends across said area, and
- connecting electronic measuring means with a first and a second end of said path, said measuring means provided to measure an electrical measurement value of the said path and provided to generate a signal when a change occurs in the electrical measurement value, as a result of tampering with said tarpaulin,
wherein the maximum elongation is that elongation just before breakage of the material.

The method has the advantage that a tarpaulin with a tamper detection system can be produced in a simple and relatively inexpensive way.

### DETAILED DESCRIPTION OF THE INVENTION

The invention will now be further described with reference to an exemplary embodiment shown in the drawing.

In the drawing:
Figure 1 shows a tarpaulin according to the invention applied to a trailer of a truck;
Figure 2 shows a tarpaulin according to the invention, and
Figure 3 shows a cross section of a tarpaulin according to the invention.

In the drawing, the same reference numeral is assigned to the same or to an analogous element.

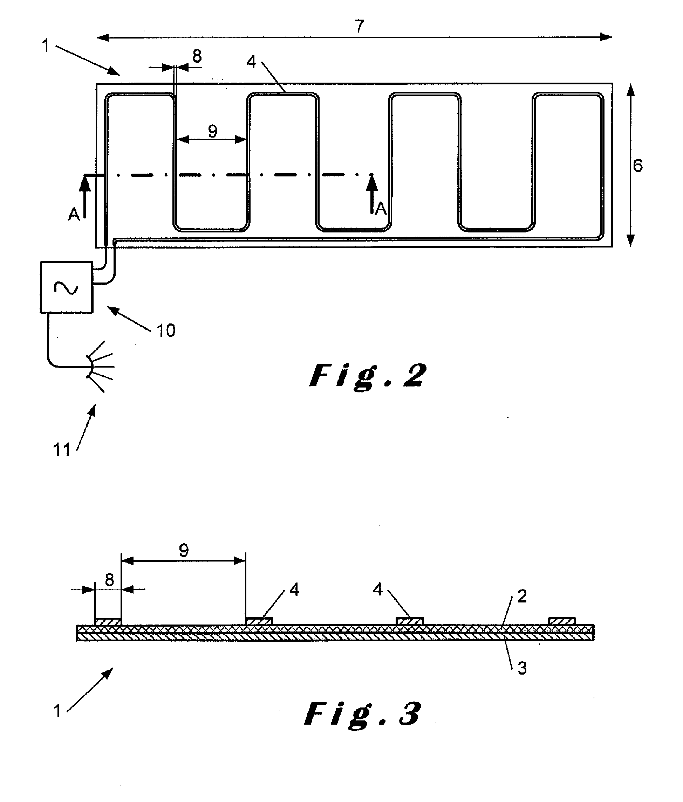

Tarpaulins 1 as referred to in the present invention, comprise a polyester fabric which is provided at least on one side with a PVC coating in order to make the tarpaulin 1 resistant to, for example, weather conditions. This coated side of the fabric is defined as the outer side of the tarpaulin, because, in use, this side will be directed towards the environment (outside) while the other side will be directed towards the goods (inside). Such a tarpaulin is shown schematically in Figure 3 in cross-section. Figure 3 shows the fabric 2, a polyester textile, onto which on one side a PVC coating 3 is applied. Multiple layers may be applied onto such a tarpaulin, for example, in order to make also the inside water-repellent or to display an image on the outside.

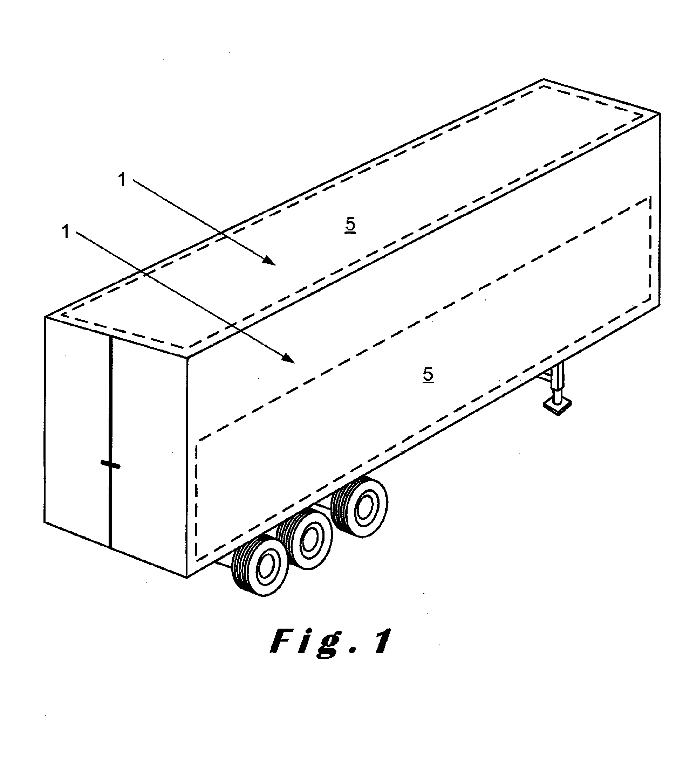

Such tarpaulins are used to cover /shield objects. For example, as shown in Figure 1, trailers of trucks will be equipped with such tarpaulins in order to shield the goods in the trailer from sight, and against the influence of the environment. Such tarpaulins may, in a similar configuration, be used to cover train wagons. Also, such a tarpaulin may be used in other applications, such as for covering pallet goods. Such tarpaulins may also serve as a tent canvas.

The flexibility and elasticity of such tarpaulins, making these tarpaulins useful in a wide scope of applications, are also their weakness, namely such tarpaulins can be cut open relatively easily with a sharp object. As a result, the tarpaulin loses its shielding function.

On the tarpaulin according to the invention, on the inside of the tarpaulin, an electrically-conductive path 4 is provided. With "inside of the tarpaulin" is meant to the tarpaulin in such a way that the path is not visible from the outside when it has been applied. Hence, this means both between the fabric and the plastic coating layer as well as on the inside (as shown in Figure 3). This electrically-conductive path does not necessarily increase the resistance against cutting open the tarpaulin, but this electrically-conductive path will enable detection of the cutting open thereof.

The electrically-conductive path 4 is applied over an area 5 of the tarpaulin 1. In Figure 2, as well as in the roof part of the trailer in Figure 1, the area 5 extends substantially over the entire tarpaulin 1 (in Figure 1, the area on the tarpaulin is indicated by a dashed line). However, this is not necessary, and, as shown in the lateral part of the trailer in Figure 1, the area 5 may further extent over only a part of the tarpaulin 1. Also, one tarpaulin 1 can be equipped with several areas (not shown).

The electrically-conductive path 4 is provided in a meandering pattern on the tarpaulin such that the pattern substantially completely fills the area. A meandering pattern is shown in Figure 2. A meandering pattern is formed by a series of curves, wherein the height of the curves determines the height 6 of the area and the total length of the concatenated curves determines the width of the area 7.

The width of the path 8 is a factor in the resistance value of the total path. Also, the distance between adjacent parts of the path 9 is a factor in the resistance value of the total path, namely when this distance becomes smaller, the path will be longer in order to cover one and the same area. The path width and distance between adjacent parts of the path are preferably as described above.

The electrically-conductive path is made of a material which is elastic and electrically-conductive, which can be applied using a printing or spraying technique, and is printed on the tarpaulin. Herewith, the elasticity and the electrical conductivity is considered when the material is dried /cured, and not when it is in a state to be applied. Such a material is, for example, a silver paste which can be applied using screen printing, and which after drying / curing is and remains electrically-conductive, even with an elastic elongation of, for instance, 3 %. Preferably, an elastic elongation is as described above, without electrical interruption occurring. An example of a useful material is the so-called "DuPont 5064 Silver Conductor" (commercial name) of DuPont MCM.

The elasticity of the electrically-conductive path provides that the tarpaulin can be folded without the electrical path being interrupted. When folding a tarpaulin, which has a certain thickness, the surface of the tarpaulin on the inside of the folding will be compressed, while the surface of the tarpaulin on the outside of the folding will be stretched. To this end, the electrically-conductive path, due to its elasticity, is provided to absorb the compression and/or stretching due to a folding of the tarpaulin, and therefore it will not lose its electrical conductivity.

The tarpaulin according to the invention is further provided with electronic measuring means 10, which, together with the electrically-conductive path 4 forms the electronic tamper detection circuit. The electronic measuring means 10 are connected with two ends of the electrically-conductive path 4, as shown in Figure 2. Hence, an electrically closed circuit is obtained which is formed by the electrically-conductive path 4 and the electronic measuring means 10. The electronic measuring means 10 comprise a current source or a voltage source which can be incorporated into the closed electrical circuit, and which can cause a current to flow through the path 4. The size of this current through, or voltage across the path 4, may further be measured by, respectively, a current meter or voltage meter in said measurement means 10, and thus provides an indication of the electrical resistance of the path 4. When this electrical resistance is too large, it can reasonably be assumed that the path 4 is somewhere interrupted, so that tampering with the tarpaulin can be determined.

Hereinabove, a configuration has been described with which, based on an electrical resistance of the path, the integrity of the path can be determined. It will be clear that other electrical measurements, such as induction and conductivity, can be measured on the basis of which such a determination can be done. Although the invention proposes an electrical measurement, it will be appreciated that an optical measurement, in which a light signal is transmitted through a light-transporting path over the tarpaulin, is entirely technically equivalent to an electrical measurement.

As an alternative to placing a current source or voltage source and measuring the current flowing through it, the two ends of the path 4 may be short-circuited, and an inductive measurement may be done to determine the integrity of the path 4. It will be clear that this is also covered by the scope of the invention: connecting electronic measuring means with a first and a second end of said path, namely a conductor, which is a part of the electronic measuring means, is connected as a short-circuit element with the first and second end of the path. The further measuring means may then be detached from the path 4.

When a predetermined change in the electrical measurement value occurs, electronic measuring means are provided to generate a signal. In practice, this signal will comprise a simple 'on' switch of a second electrical circuit. This second electrical circuit may comprise a speaker 11 such that an audible alarm signal will be generated when the second electrical circuit is switched on. The second electrical circuit may also include a radio frequency module which transmits a digital or analog data package to an external receiver. This data package may include data about the time of tampering. When a position detector is coupled to the electronic measuring means, this data package may also include the position of the tarpaulin at the time of tampering. An example of a position detector which may be provided to provide position data to the electronic measuring means is a GPS-system or a GSM. Furthermore, data about the goods may be part of the data package.

The tarpaulin according to the invention can easily be produced using the following steps.

A fabric, for example, polyester fabric, is provided. This is typically done by unrolling a continuous band of fabric that is supplied on a roll. On this fabric, a synthetic resin coating layer is applied, at least on one side thereof. This can be done by curtain coating, wherein a layer of plastic is cast onto the fabric. It can also be applied by transfer coating, calendar coating and/or laminate coating onto the fabric. A further possibility is blade coating, wherein a polymer in a liquid state is applied onto the fabric and is levelled with a blade, and subsequently dried or cured. The plastic which is applied, is preferably a polyolefin, polyurethane, fluorine polymer, acrylate, silicone, and PVC, and more preferably PVC.

Before or after the application of the plastic coating layer, the electrically conductive path as described above is applied. This is preferably done using a printing technique such as rotogravure, flexo, etching coating or digital printing, more preferably using screen printing. Other techniques such as inkjet printing or spraying are also suitable. Using screen printing, a screen is applied across the surface to be printed, which screen contains openings where material is to be printed, and which screen is closed (not porous) where no material is to be printed. On this screen, the elastic and electrically-conductive material is applied and levelled with a blade over the screen. This forces the elastic and electrically-conductive material through the screen at the openings in the screen. When the screen is removed, a pattern of elastic and electrically-conductive material will be deposited onto the surface, which corresponds to the pattern formed by the openings in the screen.

The electrically-conductive path is provided in a meandering pattern, as described above in detail, and in a manner such that the pattern covers an area of the tarpaulin.

After the elastic and electrically-conductive path has been applied onto the tarpaulin, the electronic measuring means are connected with the second ends of the path in order to form an electrical circuit. This electrical circuit is provided to conduct an electrical measurement of the path 4 and a signal is generated when a predetermined, significant change occurs in the electrical measurement value.

The method may further include the application of additional coating layers such as a paint layer or a further protective layer. With the method according to the invention, it is also possible to print a radar interference pattern in order make the tarpaulin and/or the goods invisible to rf- and/or microwave detection.

### EXPERIMENTAL

### Example 1

Onto a commercially available PVC-coated polyester fabric (B6000, Sioen Industries NV, Ardooie, Belgium) with the aid of screen printing (60 mesh), a circuit is applied on the basis of the commercial silver paste Electrodag PF-845 from Henkel Electronics. After drying for 5 minutes at 125 °C, a circuit is obtained with the following properties : good conductivity, homogeneous print, good adhesion to the PVC substrate, good flexibility at frequent bending of the substrate.

### Example 2: Determination of elongation versus electrical resistance.

Material: B6000 (Sioen Industries NV, Ardooie, Belgium) which is a PVC coated PES (900 g/m²).

Dimensions of the material: strip of 5 cm wide.

Two conductive tracks of a conductive silver paste according to the invention were applied on the material using screen printing; width of the tracks : 2 mm; track 1 is located more along the edge in comparison with the track 2 which is positioned exactly in the middle of the strip.

The ends of the strip of material are clamped in a tensile testing machine. Distance between both ends (= part which is not clamped): 15 cm.

The strip was then gradually stretched. Each step was equal to 3 mm. At each step, the electrical resistance was measured over the two tracks (over a distance of about 15 cm). The results are shown in Table 1. The material ruptures at an elongation of 34 mm. The conductive tracks at rupture are still conductive. The resistance increases by a factor of 30 from the initial state (no elongation) until just before rupture of the material. At maximum elongation (22 %, just before breakage of the material) the tracks are still electrically conductive. It is obvious that a maximum elongation is not realistic in common usage. A common elongation is 5 %. At this value, the change in the electrical resistance is minimal, compared to the initial value.

**Table 1**

| Elongation (mm) | Elongation (%) | Resistance track 1 (Ohm) | Resistance track 2 (Ohm) |
|---|---|---|---|
| 0 | 0 | 2,5 | 2,2 |
| 3 | 2 | 2,3 | 2,3 |
| 6 | 4 | 2,8 | 2,4 |
| 9 | 6 | 4,1 | 3,8 |
| 12 | 8 | 6,6 | 5,8 |
| 15 | 10 | 8,9 | 7,5 |
| 18 | 12 | 13,6 | 19 |
| 21 | 14 | 34 | 25 |
| 24 | 16 | 23 | 30 |
| 27 | 18 | 48 | 38 |
| 30 | 20 | 46 | 48 |
| 33 | 22 | 76 | 62 |
| 34 | 24 | substrate ruptures | |

### Comparative Example 1

Example 1 was repeated with another paste, Electrodag PF-410 of Henkel Electronics. The printed circuit had a cracked appearance after drying for 5 minutes at 125 °C and had a much higher resistance, a poorer flexibility and a reduced adhesion.

## Claims

1. Tarpaulin for covering goods, comprising an elastic fabric which is at least on one side provided with a plastic coating layer, and comprising an electronic tamper detection circuit for detecting tampering with at least one area of the tarpaulin, wherein said circuit comprises an electrically-conductive path provided to said tarpaulin, wherein said path is made of an elastic and electrically-conductive material able to be applied by a printing or spraying technique, wherein the ratio of the maximum elongation of said elastic and electrically-conductive material to the maximum elongation of said elastic fabric which is at least on one side provided with a plastic coating layer, is at least 1.05, and wherein said circuit comprises electronic measuring means which are connected with a first and a second end of said path to measure an electrical measurement value of this path, wherein said measuring means are further provided to generate a signal when a change of said measurement value occurs, as a result of tampering with said tarpaulin, and wherein the maximum elongation is that elongation just before breakage of the material.

2. Tarpaulin according to claim 1, wherein the electrically-conductive path is applied in a substantially meandering pattern which extends over said area.

3. Tarpaulin according to any one of the preceding claims, wherein the polarity of the elastic and electrically-conductive material is similar or identical to the polarity of the surface of the fabric or of the plastic coating layer onto which said elastic and electrically-conductive material is applied.

4. Tarpaulin according to any one of the preceding claims, wherein said fabric is a polyester fabric.

5. Tarpaulin according to any one of the preceding claims, wherein said plastic coating layer is a PVC coating.

6. Tarpaulin according to any one of the preceding claims, wherein the electrically-conductive path is provided on the fabric side of the tarpaulin.

7. Tarpaulin according to any one of the preceding claims, wherein the electrically-conductive path is provided on a plastic-coated side of the tarpaulin.

8. Tarpaulin according to any one of the preceding claims, wherein the electrically-conductive path is applied by screen printing.

9. Tarpaulin according to any one of the preceding claims, wherein the electrically-conductive path is applied by means of a spraying technique.

10. Tarpaulin according to any one of the preceding claims, wherein said path has a width of less than 15 mm, preferably less than 5 mm, more preferably less than 3 mm, most preferably about 2 mm.

11. Tarpaulin according to any one of the preceding claims, wherein said area has a surface area of at least 2 m², preferably at least 5 m², more preferably at least 10m², most preferably at least 20 m².

12. Tarpaulin according to any one of the preceding claims, wherein said elastic electrically-conductive material exhibits an elasticity such that said material does not exhibit an electrical interruption at an elongation of 1 %, preferably at an elongation of 2 %, more preferably at an elongation of 3 %, most preferably at an elongation of 5%.

13. Tarpaulin according to any one of the preceding claims, wherein said elastic fabric that is provided at least on one side of a plastic coating layer, exhibits an elongation of maximally 1 %, preferably maximally 3 %, most preferably maximally 5 %.

14. Tarpaulin according to any one of the preceding claims, wherein said path has a minimum length of 1 meter, preferably 2 meters, more preferably 5 meters, most preferably from 10 meters.

15. Tarpaulin according to any one of the preceding claims, wherein said elastic and electrically-conductive material comprises silver particles.

16. Tarpaulin according to any one of the preceding claims, wherein said tarpaulin further includes communication means for sending said signal to an external receiver.

17. Tarpaulin according to any one of the preceding claims, wherein said measuring means comprise a timer and position-determining means, and they are provided to generated said signal as a data package comprising a recent time value from said timer and a recent position value from said position-determining means.

18. A method for the manufacture of a tarpaulin for covering goods, wherein the method comprises the steps of:
- providing an elastic fabric;
- applying a plastic coating layer on at least one side of said elastic fabric;
- providing an elastic and electrically-conductive material, wherein the ratio of the maximum elongation of said elastic and electrically-conductive material to the maximum elongation of said elastic fabric that is provided at least on one side with a plastic coating layer, is at least 1.05 ;
- applying by means of a printing or spraying technique said elastic and electrically-conductive material on an area of said tarpaulin in order to form a path therewith which extends across said area, and
- connecting electronic measuring means with a first and a second end of said path, said measuring means provided to measure an electrical measurement value of the said path and provided to generate a signal when a change occurs in the electrical measurement value, as a result of tampering with said tarpaulin;
wherein the maximum elongation is that elongation just before breakage of the material.

## Patentansprüche

1. Abdeckplane zum Bedecken von Gütern, welche ein elastisches Gewebe umfasst, das zumindest auf einer Seite mit einer Kunststoffbeschichtung versehen ist, und welche einen elektronischen Manipulationserfassungskreislauf zur Manipulationserfassung in zumindest einem Bereich der Abdeckplane umfasst, wobei der erwähnte Kreislauf einen elektrisch leitenden Pfad auf der erwähnten Abdeckplane umfasst, wobei der erwähnte Pfad aus einem elastischen und elektrisch leitenden Material besteht, das durch eine Druck- oder Sprühtechnik aufgebracht werden kann, wobei das Verhältnis der maximalen Längung des erwähnten elastischen und elektrisch leitenden Materials zur maximalen Längung des erwähnten elastischen Gewebes, das auf zumindest einer Seite mit einer Kunststoffbeschichtung versehen ist, mindestens 1,05 beträgt, und wobei der erwähnte Kreislauf elektronische Messmittel umfasst, die mit einem ersten und einem zweiten Ende des erwähnten Pfades verbunden sind, um einen elektrischen Messwert dieses Pfades zu messen, wobei die erwähnten Messmittel ferner ausgelegt sind, um ein Signal zu erzeugen, wenn eine Veränderung des erwähnten Messwerts als Folge der Manipulation der erwähnten Abdeckplane eintritt, und wobei die maximale Längung die Längung unmittelbar vor dem Riss des Materials ist.

2. Abdeckplane nach Anspruch 1, wobei der elektrisch leitende Pfad in einem im Wesentlichen schlangenförmigen Muster aufgebracht ist, das sich über den erwähnten Bereich ausdehnt.

3. Abdeckplane nach irgendeinem der vorigen Ansprüche, wobei die Polarität des elastischen und elektrisch leitenden Materials ähnlich oder gleich wie die Polarität der Oberfläche des Gewebes oder der Kunststoffbeschichtung ist, auf die das erwähnte elastische und elektrisch leitende Material aufgebracht ist.

4. Abdeckplane nach irgendeinem der vorigen Ansprüche, wobei das erwähnte Gewebe ein Polyestergewebe ist.

5. Abdeckplane nach irgendeinem der vorigen Ansprüche, wobei die erwähnte Kunststoffbeschichtung eine PVC-Beschichtung ist.

6. Abdeckplane nach irgendeinem der vorigen Ansprüche, wobei der elektrisch leitende Pfad auf der Gewebeseite der Abdeckplane angebracht ist.

7. Abdeckplane nach irgendeinem der vorigen Ansprüche, wobei der elektrisch leitende Pfad auf einer kunststoffbeschichteten Seite der Abdeckplane angebracht ist.

8. Abdeckplane nach irgendeinem der vorigen Ansprüche, wobei der elektrisch leitende Pfad durch Siebdruck angebracht ist.

9. Abdeckplane nach irgendeinem der vorigen Ansprüche, wobei der elektrisch leitende Pfad durch eine Sprühtechnik angebracht ist.

10. Abdeckplane nach irgendeinem der vorigen Ansprüche, wobei der erwähnte Pfad eine Breite von weniger als 15 mm, vorzugsweise weniger als 5 mm, noch besser weniger als 3 mm und am besten von etwa 2 mm hat.

11. Abdeckplane nach irgendeinem der vorigen Ansprüche, wobei der erwähnte Bereich eine Fläche von mindestens 2 m², vorzugsweise mindestens 5 m², noch besser mindestens 10 m² und am besten von mindestens 20 m² hat.

12. Abdeckplane nach irgendeinem der vorigen Ansprüche, wobei das erwähnte elastische, elektrisch leitende Material eine solche Elastizität aufweist, dass das erwähnte Material bei einer Längung von 1 %, vorzugsweise bei einer Längung von 2 %, noch besser bei einer Längung von 3 % und am besten bei einer Längung von 5 % keine elektrische Unterbrechung aufweist.

13. Abdeckplane nach irgendeinem der vorigen Ansprüche, wobei das erwähnte elastische Gewebe, das auf zumindest einer Seite einer Kunststoffbeschichtung angebracht ist, eine Längung von höchstens 1 %, vorzugsweise höchstens 3 % und am besten von höchstens 5 % aufweist.

14. Abdeckplane nach irgendeinem der vorigen Ansprüche, wobei der erwähnte Pfad eine Länge von mindestens 1 Meter, vorzugsweise 2 Meter, noch besser 5 Meter und am besten von mindestens 10 Metern hat.

15. Abdeckplane nach irgendeinem der vorigen Ansprüche, wobei das erwähnte elastische und elektrisch leitende Material Silberpartikel umfasst.

16. Abdeckplane nach irgendeinem der vorigen Ansprüche, wobei die erwähnte Abdeckplane ferner Kommunikationsmittel zum Versenden des erwähnten Signals an einen externen Empfänger umfasst.

17. Abdeckplane nach irgendeinem der vorigen Ansprüche, wobei die erwähnten Messmittel einem Timer und positionsbestimmende Mittel umfassen und diese ausgelegt sind, um das erwähnte Signal als ein Datenpaket zu erzeugen, das einen aktuellen Zeitwert vom erwähnten Timer und einen aktuellen Positionswert von den erwähnten positionsbestimmenden Mitteln umfasst.

18. Ein Verfahren zur Herstellung einer Abdeckplane zum Bedecken von Gütern, wobei das Verfahren folgende Schritte umfasst:
- Bereitstellung eines elastischen Gewebes;
- Anbringung einer Kunststoffbeschichtung auf zumindest einer Seite des erwähnten elastischen Gewebes;
- Bereitstellung eines elastischen und elektrisch leitenden Materials, wobei das Verhältnis der maximalen Längung des erwähnten elastischen und elektrisch leitenden Materials zur maximalen Längung des erwähnten elastischen Gewebes, das auf zumindest einer Seite mit einer Kunststoffbeschichtung versehen ist, mindestens 1,05 beträgt;
- Anbringung mittels einer Druck- oder Sprühtechnik des erwähnten elastischen und elektrisch leitenden Materials auf einem Bereich der erwähnten Abdeckplane, um damit einen Pfad zu formen, der sich über den erwähnten Bereich ausdehnt, und
- Verbindung von elektronischen Messmitteln mit einem ersten und einem zweiten Ende des erwähnten Pfades, wobei die erwähnten Messmittel ausgelegt sind, um einen elektrischen Messwert des erwähnten Pfades zu messen und um ein Signal zu erzeugen, wenn eine Veränderung im elektrischen Messwert als Resultat einer Manipulation der erwähnten Abdeckplane eintritt;
wobei die maximale Längung die Längung unmittelbar vor dem Riss des Materials ist.

## Revendications

1. Bâche pour couvrir des produits, comprenant un tissu élastique qui est pourvu au moins sur un côté d'une couche de revêtement plastique, et comprenant un circuit de détection de manipulations pour détecter des manipulations intempestives d'au moins une zone de la bâche, dans laquelle ledit circuit comprend un tracé électroconducteur fourni à ladite bâche, dans laquelle ledit tracé est réalisé dans un matériau élastique et électroconducteur apte à être appliqué par une technique d'impression ou de pulvérisation, dans laquelle le rapport de l'allongement maximal dudit matériau élastique et électroconducteur à l'allongement maximal dudit tissu élastique qui est pourvu au moins sur un côté d'une couche de revêtement plastique est au moins de 1,05, et dans laquelle ledit circuit comprend des moyens de mesure électroniques qui sont connectés à une première et une deuxième extrémité dudit tracé pour mesurer une valeur de mesure électrique de ce tracé, dans laquelle lesdits moyens de mesure sont en outre prévus pour générer un signal quand un changement de ladite valeur de mesure survient à la suite de manipulations intempestives de ladite bâche, et dans laquelle l'allongement maximal est l'allongement juste avant rupture du matériau.

2. Bâche selon la revendication 1, dans laquelle le tracé électroconducteur est appliqué en un motif sensiblement sinueux qui s'étend sur ladite zone.

3. Bâche selon l'une quelconque des revendications précédentes, dans laquelle la polarité du matériau élastique et électroconducteur est similaire ou identique à la polarité de la surface du tissu ou de la couche de revêtement plastique sur laquelle ledit matériau élastique et électroconducteur est appliqué.

4. Bâche selon l'une quelconque des revendications précédentes, dans laquelle ledit tissu est un tissu de polyester.

5. Bâche selon l'une quelconque des revendications précédentes, dans laquelle ladite couche de revêtement plastique est une couche de PVC.

6. Bâche selon l'une quelconque des revendications précédentes, dans laquelle le tracé électroconducteur est prévu sur le côté tissu de la bâche

7. Bâche selon l'une quelconque des revendications précédentes, dans laquelle le tracé électroconducteur est prévu sur un côté de la bâche revêtu de plastique.

8. Bâche selon l'une quelconque des revendications précédentes, dans laquelle le tracé électroconducteur est appliqué par sérigraphie.

9. Bâche selon l'une quelconque des revendications précédentes, dans laquelle le tracé électroconducteur est appliqué au moyen d'une technique de pulvérisation.

10. Bâche selon l'une quelconque des revendications précédentes, dans laquelle ledit tracé a une largeur inférieure à 15 mm, de préférence inférieure à 5 mm, mieux encore inférieure à 3 mm, idéalement d'environ 2 mm.

11. Bâche selon l'une quelconque des revendications précédentes, dans laquelle ladite zone a une superficie d'au moins 2 m², de préférence d'au moins 5 m², mieux encore d'au moins 10 m², idéalement d'au moins 20 m².

12. Bâche selon l'une quelconque des revendications précédentes, dans laquelle ledit matériau élastique électroconducteur présente une élasticité telle que ledit matériau ne présente pas une interruption électrique à un allongement de 1 %, de préférence à un allongement de 2 %, mieux encore à un allongement de 3 %, idéalement à un allongement de 5 %.

13. Bâche selon l'une quelconque des revendications précédentes, dans laquelle ledit tissu élastique qui est prévu au moins sur un côté d'une couche de revêtement plastique présente un allongement d'au maximum 1 %, de préférence d'au maximum 3 %, idéalement d'au maximum 5%.

14. Bâche selon l'une quelconque des revendications précédentes, dans laquelle ledit tracé a une longueur minimale de 1 mètre, de préférence de 2 mètres, mieux encore de 5 mètres, idéalement de 10 mètres.

15. Bâche selon l'une quelconque des revendications précédentes, dans laquelle ledit matériau élastique et électroconducteur comprend des particules d'argent.

16. Bâche selon l'une quelconque des revendications précédentes, la bâche comprenant en outre des moyens de communication pour envoyer ledit signal à un récepteur externe.

17. Bâche selon l'une quelconque des revendications précédentes, dans laquelle lesdits moyens de mesure comprennent une minuterie et des moyens de détermination de position, et ils sont prévus pour générer ledit signal comme un paquet de données comprenant une valeur de temps récente provenant de ladite minuterie et une valeur de position récente provenant des moyens de détermination de position.

18. Procédé de fabrication d'une bâche pour couvrir des produits, le procédé comprenant les étapes consistant à :
- prévoir un tissu élastique ;
- appliquer une couche de revêtement plastique sur au moins un côté dudit tissu élastique ;
- prévoir un matériau élastique et électroconducteur, le rapport de l'allongement maximal dudit matériau élastique et électroconducteur à l'allongement maximal dudit tissu élastique qui est prévu au moins sur un côté de la couche de revêtement plastique étant d'au moins 1,05 ;
- appliquer au moyen d'une technique d'impression ou de pulvérisation ledit matériau élastique et électroconducteur sur une zone de ladite bâche afin de former avec celui-ci un tracé qui s'étend à travers ladite zone ; et
- connecter des moyens de mesure électronique à une première et une deuxième extrémité dudit tracé, lesdits moyens de mesure étant prévus pour mesurer une valeur de mesure électrique dudit tracé et prévus pour générer un signal quand un changement de la valeur de mesure électrique survient à la suite de manipulations intempestives de ladite bâche ;
l'allongement maximal étant l'allongement juste avant rupture du matériau.
